# EUROPEAN PATENT APPLICATION

(11) **EP 3 480 694 A1**
(43) Date of publication of application: **08.05.2019**
(21) Application number: 17819838.8
(22) Date of filing: 12.06.2017
(51) Int. Cl.: G06F 9/48, B60R 11/02, G06F 3/0484

(54) **INFORMATION PROCESSING DEVICE AND INFORMATION PROCESSING METHOD**

(30) Priority: 30.06.2016 JP 2016130855
(71) Applicant: DENSO TEN Limited, Hyogu-ku, Kobe-shi Hyogo 652-8510 (JP)
(72) Inventor: MATSUSHITA, Naoto, Kobe-shi Hyogo 652-8510 (JP)
(74) Representative: Haseltine Lake LLP
(86) International application number: PCT/JP2017/021656
(87) International publication number: WO 2018/003474

(57) **Abstract**

An information processing device and an information processing method are provided that do not have to execute a design change in a case where a mode is newly added. An information processing device according to an embodiment includes a processor. The processor sequentially accepts execution requests of a plurality of information processes where two or more pieces of information that indicate a priority are allocated thereto, respectively. Then, the processor executes, in a case where an execution request of a second information process is accepted during execution of a first information process among the plurality of information processes, adjustment between execution of the first information process being continued and the second information process being executed instead of the first information process, based on the two or more pieces of information.

## Description

### Field

Conventionally, there is an information processing device that, in a case where, while an output device that outputs information, such as an on-vehicle display or an on-vehicle speaker, outputs a certain piece of information (that will be described as a "mode" below), an output request of another mode is executed, determines which output of both competing modes is prioritized, by means of adjustment.

Herein, an output request refers to, for example, a request to output a sound such as "turn right ahead" from a navigation device when a sound comes from a speaker of a radio or display a caution such as "a mail arrives" from a mobile communication terminal device when a navigation map screen is displayed on a display.

In general, an information processing device stores a round-robin competition result table with a predetermined winning or losing of adjustment between respective or mutual modes (that will be described as a "adjustment matrix" below). An adjustment matrix is, for example, a table where each mode in a case of being output is enumerated in a first column, each mode in a case of being requested to output is enumerated in a first row, and results of winning or losing of adjustment between respective or mutual modes are written in a second column and a second row or later.

An information processing device determines that output of a mode during output thereof (that will be described as a "current mode" below) is continued or another mode with an output request being executed (that will be described as a "new mode" below) is output instead of such a current mode, based on such an adjustment matrix.

### Citation List

### Patent Literature

Patent Literature 1: Japanese Patent Application Publication No. 2007-145137

### Summary

### Technical Problem

However, an information processing device that uses an adjustment matrix has to determine, in a case where a mode is newly added, a result of winning or losing of adjustment between any existing mode and an additional mode to execute a design change.

In particular, it is now common that various manufacturers manufacture a plurality of on-vehicle instruments and output requests from such a plurality of instruments are adjusted by an information processing device to execute output. Furthermore, an instrument that is connected to an information processing device is not limited to an on-vehicle instrument and covers a wide variety thereof, for example, a mobile communication terminal, a music player, or the like that is possessed by an occupant.

Then, functions of such on-vehicle instruments may independently be added or extended by respective manufacturers, and further, a new on-vehicle instrument may be mounted on a vehicle. Moreover, it is possible to readily add a new function to a mobile communication terminal or the like, by merely downloading and installing application software.

Accordingly, there is a problem in that a designer for an information processing device has to review priorities of output requests of all instruments with each addition or extension of a function and execute a change of an adjustment matrix (that is a design change of the information processing device), so that there is significant limitation on addition or extension of a function, and further, it takes a lot of time to execute development for dealing with a new function.

An embodiment of the present invention is provided by taking the above into consideration and aims to provide an information processing device and an information processing method that do not have to execute a design change in a case where a mode is newly added.

### Solution to Problem

An information processing device according an aspect of an embodiment includes a processor. The processor sequentially accepts execution requests of a plurality of information processes where two or more pieces of information that indicate a priority are allocated thereto, respectively. Then, the processor executes, in a case where an execution request of a second information process is accepted during execution of a first information process among the plurality of information processes, adjustment between execution of the first information process being continued and the second information process being executed instead of the first information process, based on the two or more pieces of information.

### Advantageous Effects of Invention

According to an embodiment, it is possible to provide an information processing device and an information processing methods that do not have to execute a design change in a case where a mode is newly added.

### Brief Description of Drawings

FIG. 1 is a diagram illustrating an output processing method according to an embodiment.
FIG. 2 is a block diagram illustrating an example of a configuration of an output processing device according to an embodiment.
FIG. 3 is an illustration diagram illustrating an example of information that is transmitted to an output processing device as an output request by an on-vehicle instrument according to an embodiment.
FIG. 4 is an illustration diagram illustrating a correspondence relationship between an adjustment matrix according to an embodiment and two or more parameters that are allocated to each mode.
FIG. 5 is an illustration diagram illustrating a correspondence relationship between an adjustment matrix according to an embodiment and two or more parameters that include waiting bits that are allocated to each mode.
FIG. 6 is an illustration diagram illustrating a correspondence relationship between an adjustment matrix according to an embodiment and two or more parameters that include sub-priorities that are allocated to each mode.
FIG. 7 is a flowchart illustrating a process that is executed by a control unit of an output processing device according to an embodiment.

### Description of Embodiments

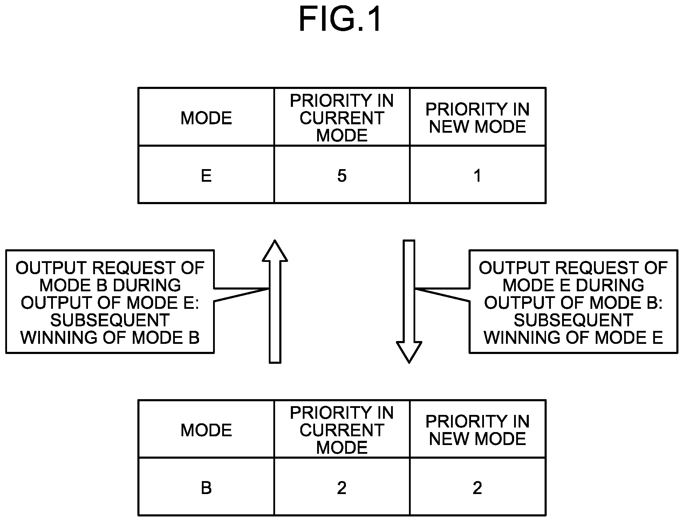

Hereinafter, an information processing device and an information processing method according to an embodiment will be explained in detail with reference to the accompanying drawings. Herein, a case where an information processing device is an output processing device that determines, by means of adjustment, whether or not information that is requested to output by a plurality of on-vehicle instruments is output by an output device will be provided and explained as an example. Additionally, the present invention is not limited by such an embodiment. First, an output processing method that is executed by an output processing device according to an embodiment will be explained with reference to FIG. 1. FIG. 1 is a diagram illustrating an output processing method according to an embodiment.

Hereinafter, each information that is required to output by a plurality of on-vehicle instruments that are provided in a vehicle is referred to as a mode, where a mode that is being output by an output device that outputs a mode is referred to as a current mode and another mode that is requested to output during output of a current mode is referred to as a new mode.

An output processing method according to an embodiment is a method such that an output processing device determines, in a case where an output request of a new mode is executed during output of a current mode, that output of the current mode is continued or the new mode is output instead of the current mode, by means of adjustment.

In the present embodiment, regularity with respect to a result of winning or losing of adjustment in an adjustment matrix is analyzed and two or more parameters that include parameters that indicate a priority for outputting a mode are allocated to each mode based on a result of such analysis.

Then, in a case where an output request of a new mode is executed during output of a current mode, an output processing method according to an embodiment executes adjustment that is based on two or more parameters of the current mode and two or more parameters of the new mode. Thereby, it is possible for an output processing method according to an embodiment to derive a result of winning or losing of adjustment in accordance with an adjustment matrix without using the adjustment matrix.

Therefore, due to an output processing method according to an embodiment, in a case where a mode is newly added, two or more parameters that indicate a priority for output are allocated to an additional mode, so that it is possible to execute adjustment of the additional mode without executing a design change of an output processing device.

Specifically, in an adjustment matrix, a priority for outputting a mode is allocated to each mode one by one, where adjustment between a current mode and a new mode is provided with regularity that is generally wining of a substantially higher priority and winning of the new mode in a case where priorities thereof are identical.

However, depending on a mode or a situation, it may be preferable that a result of winning or losing in accordance with the above-mentioned regularity is provided in a case of a current mode and a new mode is output instead of a current mode in a case of the new mode even in a case where a priority thereof is lower than that of the current mode.

A case where subsequent interruption is prioritized is provided, for example, in such a manner that when a sound comes from a speaker of a radio, an interruptive output of a sound such as "turn right ahead" from a navigation device is executed, or alternatively, when an instruction to switch to a radio is provided while a message of some kind is output from a navigation device, a sound of such navigation is interrupted and a sound is output from the radio.

Similarly, depending on a mode or a situation, it may be preferable that a result of winning or losing in accordance with the above-mentioned regularity is provided in a case of a new mode and output of a current mode is continued in a case of the current mode even in a case where a priority thereof is lower than that of a new mode.

A case where previous occupation of an output device is prioritized is provided, for example, in such a manner that, when a map screen of a navigation device is displayed on an display, a caution display request is rejected and display of the map screen is continued even in a case where a request to display a caution such as "a mail arrives" is provided from a communication terminal device.

Accordingly, a part of an adjustment matrix is a part that is not provided with a result of winning or losing in accordance with the above-mentioned regularity. Therefore, in a case where a priority for outputting a mode is merely allocated to each mode one by one, it may be impossible to derive a result of winning or losing in accordance with an adjustment matrix.

For example, if priorities of "2" and "5" are allocated to mode B and mode E, respectively, regardless of a current mode or a new mode, it is impossible for mode E to win against mode B whether it is a current mode or a new mode.

However, an adjustment matrix may be provided in such a manner that mode E loses in accordance with a priority thereof in a case where a current mode is mode E and a new mode is mode B and mode E wins against a priority thereof in a case where a current mode is mode B and a new mode is mode E.

Accordingly, in an output processing method according to the present embodiment, two or more parameters that include parameters that indicate a priority for output is allocated to each mode. For example, as illustrated in FIG. 1, "5" as a parameter that indicates a priority in a current mode and "1" as a parameter that indicates a priority in a new mode are allocated to mode E. On the other hand, "2" as a parameter that indicates a priority in a current mode and "2" as a parameter that indicates a priority in a new mode are allocated to mode B. Additionally, a priority herein increases with decreasing a number that is a parameter.

Thereby, in an output processing method according to the present embodiment, a priority in a current mode for mode E is "5" and a priority in a new mode for mode B is "2", and hence, in a case where an output request of mode B is executed during output of mode E, subsequent winning of mode B that is a new mode is provided. As a result, mode B is output instead of mode E during output thereof.

Furthermore, in an output processing method according to an embodiment, a priority in a new mode for mode E is "1" and a priority in a current mode for mode B is "2", and hence, in a case where an output request of mode E is executed during output of mode B, subsequent winning of mode E that is a new mode is provided. As a result, mode E is output instead of mode B during output thereof.

Thus, an output processing method according to an embodiment compares two or more parameters that include priorities that are allocated to respective modes, and thereby, it is possible to derive a result of winning or losing of adjustment in accordance with an adjustment matrix without using the adjustment matrix.

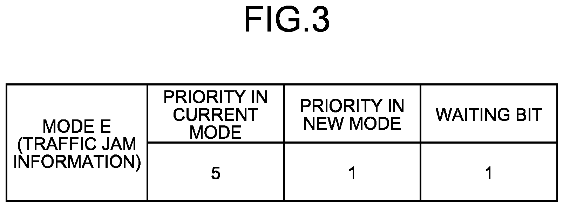

Therefore, in an output processing method according to an embodiment, in a case where a mode is newly added, two or more parameters that include a parameters that indicate a priority are allocated to an additional mode, and thereby, it is possible to execute adjustment of the additional mode without a design change of an output processing device. Additionally, a parameter that is allocated to each mode, other than a priority in a current mode and a priority in a new mode, will be described later with reference to FIG. 3.

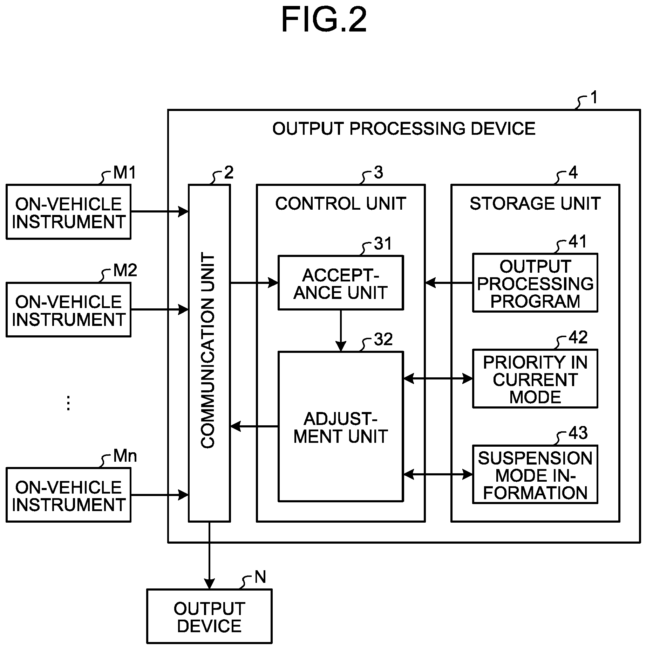

Next, an output processing device according to an embodiment will be explained with reference to FIG. 2. FIG. 2 is a block diagram illustrating an example of a configuration of an output processing device 1 according to an embodiment. As illustrated in FIG. 2, the output processing device 1 is connected to a plurality of on-vehicle instruments M1, M2 to Mn (where n is a natural number that is greater than or equal to three) and an output device N.

The plurality of on-vehicle instruments M1, M2 to Mn are, for example, a car navigation device, an audio device, a television device, a driving support device, a vehicle-to-vehicle communication device, a vehicle-to-infrastructure communication device, a traffic information receiving device, or the like. Each of the on-vehicle instruments M1, M2 to Mn outputs an output request of a mode to the output processing device 1 depending on an operation of a user or a situation.

An audio device or a television device transmits, for example, in a case where it is operated by a user, an output request of a screen or sound mode dependent on such an operation or the like to the output processing device 1. A car navigation device transmits, for example, in a case where a destination is set, an output request of a scree mode that indicates a route to the destination to the output processing device 1 and transmits, when approaching a fork in the middle of the route, an output request of a screen mode that guides a direction of travel or the like to the output processing device 1.

Furthermore, a vehicle-to-vehicle communication device and a vehicle-to-infrastructure communication device transmit, for example, an output request of a screen or sound mode that indicates a situation of another vehicle that runs around its own vehicle or the like to the output processing device 1. Furthermore, a traffic information receiving device transmits an output request of a screen or sound mode that indicates traffic jam information, accident information, or the like around its own vehicle or the like to the output processing device 1.

Herein, each of the on-vehicle instruments M1, M2 to Mn transmits a mode that requests output thereof and two or more parameters that include an output priority that is allocated to the mode, as an output request, to the output processing device 1. Herein, an example of information that is transmitted to the output processing device 1 as an output request by the on-vehicle instrument M1 will be explained with reference to FIG. 3.

FIG. 3 is an illustration diagram illustrating an example of information that is transmitted to the output processing device 1 as a output request by the on-vehicle instrument M1 according to an embodiment. FIG. 3 illustrates an example of information that is transmitted to the output processing device 1 in a case where the on-vehicle instrument M1 is a traffic information receiving device and receives traffic jam information.

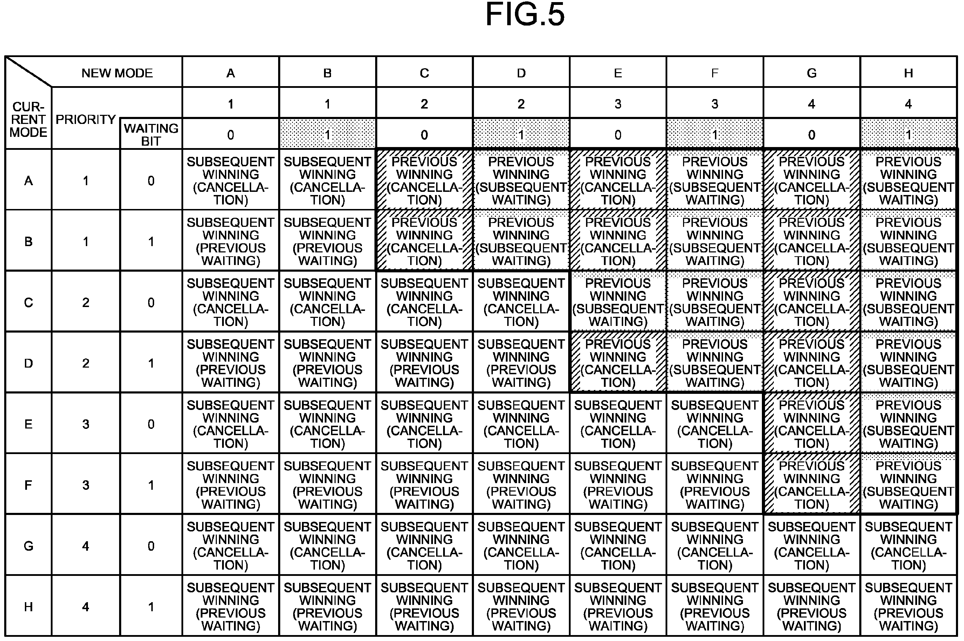

As illustrated in FIG. 3, the on-vehicle instrument M1 receives, for example, traffic jam information, and then, transmits, to the output processing device 1, information that includes mode E of traffic jam information, a priority of "5" in a current mode and a priority of "1" in a new mode that are allocated to mode E, and a waiting bit of "1" as an output request. Additionally, a waiting bit will be described later with reference to FIG. 5.

Thus, for a mode that has to be delivered to a user relatively early and has a low need to be output continuously after output thereof, such as mode E that is traffic jam information, a parameter of priority is allocated in such a manner that a priority in a new mode is higher than a priority in a current mode.

By returning to FIG. 2, the output device N includes, for example, a device that outputs image information such as a liquid crystal display and a device that outputs sound information such as a speaker. The output device N outputs a screen or sound mode that is transmitted from the output processing device 1.

The output processing device 1 includes a communication unit 2, a control unit 3, and a storage unit 4. The communication unit 2 is a communication interface that executes transmission or reception of information between the on-vehicle instruments M1, M2 to Mn and the output device N. The communication unit 2 receives an output request of a mode from the on-vehicle instruments M1, M2 to Mn and outputs it to the control unit 3.

The storage unit 4 stores an output processing program 41, a priority in a current mode 42, and suspension mode information 43. The output processing program 41 is a program that is executed to determine a mode that is output by the output device N in a case where the control unit 3 accepts an output request of a mode from the on-vehicle instruments M1, M2 to Mn through the communication unit 2.

The priority in a current mode 42 is a priority in a current mode that is allocated to an mode that is being output by the output device N. The suspension mode information 43 is a mode where output that is executed by the output device N is being suspended. Additionally, output suspension of a mode will be described later with reference to FIG. 5.

Such a storage unit 4 is, for example, a semiconductor memory element such as a Random Access Memory (RAM) or a flash memory or a storage device such as a Hard Disk Drive (HDD) or an optical disc.

The control unit 3 includes, for example, a microcomputer that has a Central Processing Unit (CPU), a Read Only Memory (ROM), a Random Access Memory (RAM), an input/output port, and the like, and a variety of circuits.

The control unit 3 includes an acceptance unit 31 and an adjustment unit 32. For example, the above-mentioned CPU reads and executes the output processing program 41 that is stored in the storage unit 4, and thereby, such an acceptance unit 31 and an adjustment unit 32 are realized.

Additionally, a part or all of each of the acceptance unit 31 and the adjustment unit 32 may be composed of hardware such as an Application Specific Integrated Circuit (ASIC) or a Field Programmable Gate Array (FPGA).

The acceptance unit 31 accepts an output request of each mode that is input from the communication unit 2 and outputs it to the adjustment unit 32. In a case where the output device N is not outputting a mode, as an output request is input from the acceptance unit 31, the adjustment unit 32 causes the storage unit 4 to store the priority in a current mode 42 that is included in the output request. Then, the adjustment unit 32 transmits a mode that is included in an output request to the output device N through the communication unit 2 and causes the output device N to output the mode.

Furthermore, in a case where the output device N is outputting a mode, as an output request of another mode is input from the acceptance unit 31, the adjustment unit 32 executes adjustment that is based on a priority in a new mode that is included in the output request and the priority in a current mode 42 that is stored in the storage unit 4.

That is, the adjustment unit 32 executes adjustment between output of a current mode being continued and a new mode being output instead of the current mode based on the priority in the current mode 42 for a mode during output thereof and a priority in the new mode for a mode during output request thereof.

Specifically, the adjustment unit 32 compares the priority in a current mode 42 for a mode that is being output and a priority in a new mode for a mode that is being requested to be output. Then, in a case where the priority in a current mode 42 for a mode that is being output is higher than a priority in a new mode for a mode that is being requested to output, the adjustment unit 32 determines winning of such a mode during output thereof (previous winning) and continues output of the mode during output thereof.

Furthermore, in a case where the priority in a current mode 42 for a mode that is being output is lower than a priority in a new mode for a mode that is being requested to output, the adjustment unit 32 determines winning of such a mode during output request thereof (subsequent winning) and causes the output device N to output the mode during output request thereof instead of such a mode during output thereof.

Thus, the adjustment unit 32 determines, by means of adjustment, winning or losing of a current mode and a new mode that are competing, based on two or more parameters that include priorities that are allocated to a mode during output thereof and a mode during output request thereof, respectively.

Thereby, it is possible for the output processing device 1 to derive a result of adjustment in accordance with an adjustment matrix even in a case where the adjustment matrix is not stored in the storage unit 4, and hence, in a case where a mode is newly added, a design change such as storing an adjustment matrix with such a mode being added thereto is not needed.

Particularly in FIG. 2, a change of an adjustment matrix that is stored in the output processing device 1 (that is a design change of the output processing device 1, per se) like a conventional method does not have to be executed and a freedom of extension or addition of a function is greatly improved, even in a case where a plurality of on-vehicle instruments are mounted as separate units, a case where a new mode is added to a certain unit (for example, M1), or a case where a new unit (for example, Mn+1 that is not illustrated) is added.

Such an effect is particularly significant in a case where output requests of a plurality of on-vehicle instruments that are manufactured by various manufacturers or instruments other than an on-vehicle instrument, such as mobile communication terminals or mobile audio players are adjusted and output. Specifically, a manufacturer of an on-vehicle instrument or application software that desires adjustment just has to allocate two or more parameters that include a priority to each mode that is output by the instrument or application software that is manufactured thereby, and it is sufficient for the output processing device 1 to execute adjustment between respective modes in accordance with such parameters that are output in association with the respective modes.

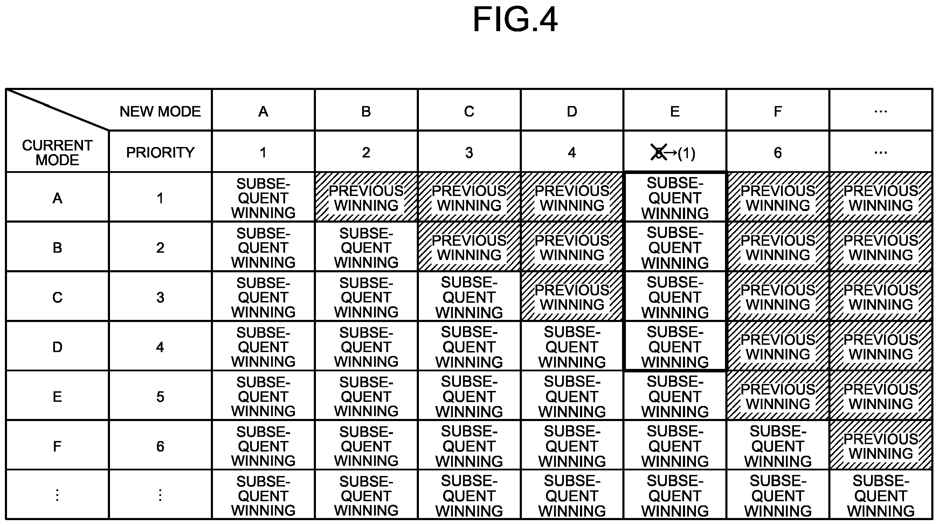

Herein, a case where two or more parameters that include a priority are allocated to each mode so that it is possible for the output processing device 1 to derive a result of adjustment in accordance with an adjustment matrix will be explained with reference to FIG. 4. FIG. 4 is an illustration diagram illustrating a correspondence relationship between an adjustment matrix according to an embodiment and two or more parameters that are allocated to each mode.

FIG. 4 enumerates a current mode in a first column and enumerates a new mode in a first row. Furthermore, FIG. 4 enumerates a priority in a current mode in a second column and enumerates a priority in a new mode in a second row. Moreover, FIG. 4 illustrates results of winning or losing of adjustment between respective or mutual modes that are written in an adjustment matrix in a third column and a third low or later.

As illustrated in FIG. 4, it is assumed that priorities are allocated to respective modes one by one, like a priority of "1" to mode A, a priority of "2" to mode B, a priority of "3" to mode C, a priority of "4" to mode D, a priority of "5" to mode E, and a priority of "6" to mode F.

Accordingly, the adjustment unit 32 executes adjustment that is based on a regularity of winning of a higher priority and subsequent winning in a case where priorities are identical, for a part other than a part surrounded with a thick frame in FIG. 4, so that it is possible to derive a result of winning or losing in accordance with an adjustment matrix.

However, it is impossible for the adjustment unit 32 to derive a result of winning or losing in accordance with an adjustment matrix, for a part surrounded with a thick frame in FIG. 4. Specifically, in a case where a priority of mode E is "5", as an output request of mode E is executed during output of one of modes A, B, C, and D with priorities higher than "5", a result of winning or losing is previous winning, so that it is impossible for the adjustment unit 32 to derive a result of winning or losing in accordance with an adjustment matrix.

Hence, in the present embodiment, the priority in a current mode 42 and a priority in a new mode are allocated to each mode. Moreover, in the present embodiment, for a mode provided with a result of winning or losing that is not accordance with a regularity of winning of a higher priority and subsequent winning in a case where priorities are identical, in an adjustment matrix, the priority in a current mode 42 and a priority in a new mode that are allocated thereto are different.

In an example as illustrated in FIG. 4, "1" that is different from "5" that is the priority in a current mode 42 is allocated to mode E as a priority in a new mode. Thereby, it is possible for the adjustment unit 32 to derive a result of winning or losing in accordance with an adjustment matrix.

By returning to FIG. 2, an explanation of an operation of the adjustment unit 32 will be continued. The adjustment unit 32 executes whether or not output of a mode that is determined to be losing as a result of adjustment is suspended, based on a waiting bit that is allocated to each mode, and causes the storage unit 4 to store a mode that is determined to be suspended, as the suspension mode information 43.

Herein, a waiting bit that is allocated to each mode and suspension of a mode that is based on the waiting bit will be explained with reference to FIG. 5. FIG. 5 is an illustration diagram illustrating a correspondence relationship between an adjustment matrix according to an embodiment and two or more parameters that include a waiting bit that is allocated to each mode.

Additionally, FIG. 4 and FIG. 5 are based on different adjustment matrices. Hence, FIG. 4 and FIG. 5 have different parts in a priority that is allocated to each mode and a result of winning or losing of adjustment.

FIG. 5 enumerates a current mode in a first column, enumerates a new mode in a first row, enumerates a priority in such a current mode in a second column, and enumerates a priority in such a new mode in a second row. Furthermore, FIG. 5 enumerates a waiting bit in a case where each bit is determined to be losing as a result of adjustment, in a third column and a third row. A waiting bit of "0" means that output of a mode is not suspended. A waiting bit of "1" means that output of a mode is suspended.

Moreover, FIG. 5 illustrates a result of determination as to whether or not output of a mode that is determined to be losing as a result of each adjustment is suspended, in combination with a result of winning or losing of adjustment between respective or mutual modes that are written in an adjustment matrix, in a fourth column and a fourth row or later. "CANCELLATION" as a result of determination means that output of a mode that is determined to be losing as a result of each adjustment is not suspended.

"PREVIOUS WAITING" as a result of determination means that output of a current mode that is determined to be losing as a result of adjustment is suspended. "SUBSEQUENT WAITING" as a result of determination means that output of a new mode that is determined to be losing as a result of adjustment is suspended.

In the present embodiment, a waiting bit of "1" is allocated to a mode with a relatively high importance and a waiting bit of "0" is allocated to a mode with a relatively low importance, from the viewpoint of running safety or comfort of its own vehicle.

Thereby, it is possible for the adjustment unit 32 to cause the storage unit 4 to store a losing mode as the suspension mode information 43 in a case where a mode with a relatively high importance is determined to be losing as a result of adjustment, and to output the mode that is stored as the suspension mode information 43 in a case where output of a winning mode is completed.

Additionally, a sub-priority instead of a waiting bit is further allocated to each mode, and thereby, it is possible for the adjustment unit 32 to execute subdivision of a result of adjustment between competing modes with identical priorities and determination as to whether or not output of a mode that is determined to be losing as a result of adjustment is suspended.

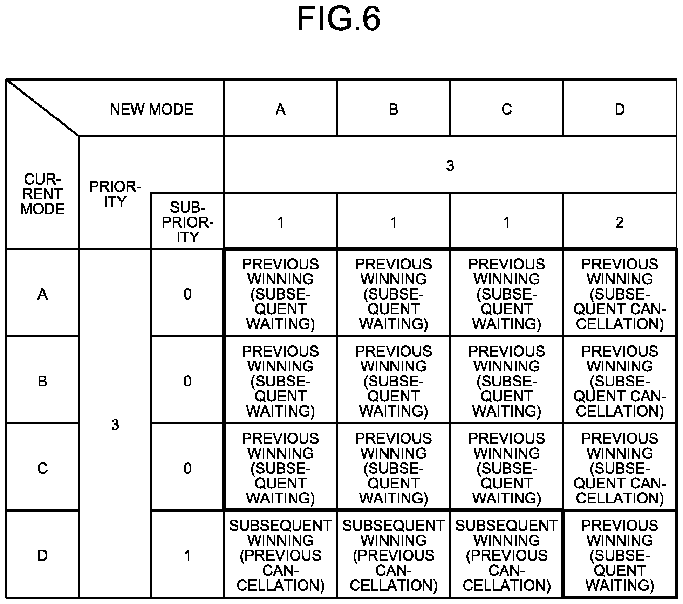

Herein, a sub-priority that is allocated to each mode, suspension of a mode that is based on such a sub-priority, and a result of adjustment will be explained with reference to FIG. 6. FIG. 6 is an illustration diagram illustrating a correspondence relationship between an adjustment matrix according to an embodiment and two or more parameters that include a sub-priority that is allocated to each mode.

Additionally, FIG. 4, FIG. 5, and FIG. 6 are based on different adjustment matrices. Hence, FIG. 4, FIG. 5, and FIG. 6 have different parts in a priority that is allocated to each mode and a result of winning or losing of adjustment.

FIG. 6 enumerates a current mode in a first column, enumerates a new mode in a first row, writes a priority in such a current mode in a second column, and writes a priority in such a new mode in a second row. Furthermore, FIG. 6 enumerates a sub-priority in a current mode in a third column and enumerates a sub-priority in a new mode in a third row. Additionally, a sub-priority is herein provided in such a manner that such a sub-priority increases with decreasing a number that is a parameter.

Moreover, FIG. 6 writes a result of determination as to whether or not output of a mode that is determined to be losing as a result of each adjustment is suspended, in combination with a result of winning or losing of adjustment between respective or mutual modes that are written in an adjustment matrix, in a fourth column and a fourth row or later.

Additionally, "SUBSEQUENT WAITING" as a result of determination has a meaning identical to that of "SUBSEQUENT WAITING" as illustrated in FIG. 5. Furthermore, "PREVIOUS CANCELLATION" as a result of determination means that output of a current mode is not suspended in a case where such a current mode is determined to be losing against a new mode as a result of adjustment.

"SUBSEQUENT CANCELLATION" as a result of determination means that output of a new mode is not suspended in a case where such a new mode is determined to be losing against a current mode as a result of adjustment. In the present embodiment, a higher sub-priority is allocated to a mode with a higher importance among modes with identical priorities being allocated thereto, from the viewpoint of running safety or comfort of its own vehicle.

First, the adjustment unit 32 compares priorities in a current mode and a new mode for adjustment in a case where a sub-priority is allocated to each mode. Then, the adjustment unit 32 compares sub-priorities in a current mode and a new mode and determines winning of a mode with a higher sub-priority in a case where priorities thereof are identical, and determines winning of such a new mode in a case where sub-priorities thereof are identical.

Moreover, in a case where winning of a current mode (previous winning) is determined as a result of adjustment that is based on a sub-priority, the adjustment unit 32 suspends output of a new mode (subsequent waiting) if a difference between sub-priorities in the current mode and the new mode is less than 2.

Furthermore, in a case where winning of a current mode (previous winning) is determined as a result of adjustment that is based on a sub-priority, the adjustment unit 32 does not suspend output of a new mode (subsequent cancellation) if a difference between sub-priorities in the current mode and the new mode is greater than or equal to 2. Additionally, in a case where winning of a new mode (subsequent winning) is determined as a result of adjustment that is based on a sub-priority, the adjustment unit 32 does not suspend output of a current mode (previous cancellation).

Thereby, it is possible for the adjustment unit 32 to derive a result of winning or losing of adjustment as illustrated in FIG. 6, so that it is possible to execute subdivision of a result of adjustment between competing modes with identical priorities and determination as to whether or not output of a mode that is determined to be losing as a result of adjustment is suspended.

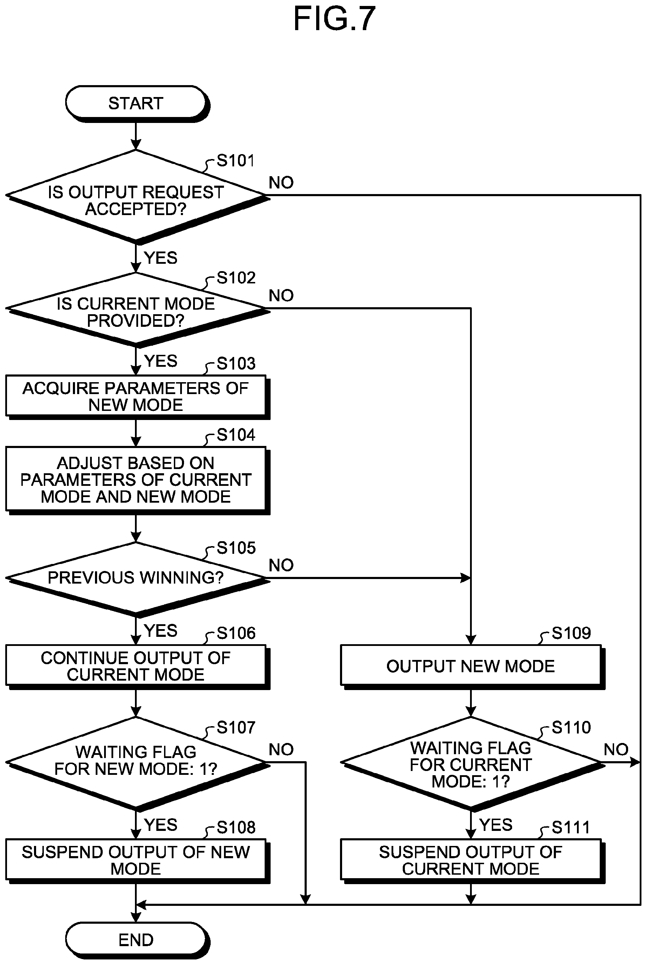

Next, a process that is executed by the control unit 3 of the output processing device 1 will be explained with reference to FIG. 7. FIG. 7 is a flowchart illustrating a process that is executed by the control unit 3 of the output processing device 1 according to an embodiment. The control unit 3 repeatedly executes a process as illustrated in FIG. 7 during a period of time when a power supply of its own vehicle is turned on.

Specifically, as illustrated in FIG. 7, the control unit 3 first executes determination as to whether or not an output request of a mode is accepted (step S101). Then, in a case where it is determined that an output request is not accepted (step S101, No), the control unit 3 ends such a process.

Furthermore, in a case where it is determined that an output request is accepted (step S101, Yes), the control unit 3 executes determination as to whether or not a current mode is provided (step S102). That is, the control unit 3 determines whether or not a mode that is being output by the output device N is provided.

Then, in a case where it is determined that a current mode is not provided (step S102, No), the control unit 3 transfers such a process to step S109. Furthermore, in a case where it is determined that a current mode is provided (step S102, Yes), the control unit 3 acquires a parameter of a new mode. Specifically, the control unit 3 acquires a priority in a new mode for another mode with an output request that is accepted during output of a mode (step S103).

Subsequently, the control unit 3 executes adjustment based on parameters of a current mode and a new mode (step S104). Specifically, the control unit 3 compares a priority in a current mode for a mode during output thereof and a priority in a new mode for another mode during output request thereof.

Then, the control unit 3 determines whether or not previous winning is provided as a result of adjustment, that is, whether or not a priority in a current mode for a mode during output thereof is higher than a priority in a new mode for another mode during output request thereof (step S105).

In a case where previous winning is not provided, that is, subsequent winning is determined (step S105, No), the control unit 3 transfers such a process to step S109. At step 109, the control unit 3 causes the output device N to output a new mode.

Specifically, in a case where No is determined at step S105, the control unit 3 causes the output device N to output another mode during output request thereof instead of a mode during output thereof. Additionally, in a case where No is determined at step S102, a mode during output thereof is not provided, and hence, the control unit 3 causes the output device N to output a mode during output request thereof.

Subsequently, the control unit 3 determines whether or not a waiting flag for a current mode with output that is interrupted by output of a new mode is "1" (step S110). Then, in a case where it is determined that a waiting flag is "1" (step S110, Yes), the control unit 3 suspends output of a current mode with output being interrupted until output of a new mode is completed (step S111) and ends such a process. Additionally, the control unit 3 causes the output device N to output a current mode during suspension thereof after completion of output of a new mode, although illustration thereof is omitted herein.

Furthermore, in a case where it is determined that a waiting flag for a current mode is not "1" (step S110, No), the control unit 3 ends such a process without suspending output of the current mode. Additionally, if a current mode during output thereof is not provided in a case where a new mode is output at step S109, a waiting flag for a current mode that is determined at step S110 is not provided, and hence, the control unit 3 determines that the waiting flag is not "1" (step S110, No) and ends such a process.

Furthermore, in a case where previous wining is determined at step S105 (step S105, Yes), the control unit 3 continues output of a current mode during output thereof (step S106) and determines whether or not a waiting flag of a new mode is "1" (step S107). Then, in a case where it is determined that a waiting flag of a new mode is not "1" (step S107, No), the control unit 3 ends such a process.

Furthermore, in a case where it is determined that a waiting flag is "1" (step S107, Yes), the control unit 3 suspends output of a new mode until output of a current mode is completed (step S108) and ends such a process. Additionally, the control unit 3 causes the output device N to output a new mode during suspension thereof after completion of output of a current mode, although illustration thereof is omitted herein.

Additionally, although a case where the adjustment unit 32 determines whether or not output of a mode that is determined to be losing as a result of adjustment is suspended, based on a waiting bit or a sub-priority, has been explained in the above-mentioned embodiment, this is an example.

The adjustment unit 32 may be configured to determine whether or not output of a mode that is determined to be losing as a result of adjustment is suspended, based on a parameter other than a waiting bit or a sub-priority. For example, in a case where a period of time after a start of output of each mode and before completion of the output (that will be described as an "output time" below) is predetermined, the adjustment unit 32 may be configured to determine whether or not output of a mode is suspended, based on an output time of each mode.

In a case where such a configuration is provided, a parameter that indicates a level dependent on a length of an output time is preliminarily allocated to each mode. For example, a level of "1", a level of "2", a level of "3", and a level of "4" are allocated to a mode with an output time that is less than 5 seconds, a mode with an output time that is greater than or equal to 5 seconds and less than 15 seconds, a mode with an output time that is greater than or equal to 15 seconds and less than 30 seconds, and a mode with an output time that is greater than or equal to 30 seconds, respectively.

Additionally, although a level is allocated depending on an output time in the above-mentioned example, allocation may be executed depending on the number of characters in a message. For example, a level of "1" in a case where the number of characters is less than 10, a level of "2" in a case where the number of characters is greater than or equal to 10 and less than 20, a level of "3" in a case where the number of characters is greater than or equal to 20 and less than 40, and a level of "4" in a case where the number of characters is greater than or equal to 40 may be allocated.

Then, in a case where losing of a new mode is determined as a result of adjustment that is based on a priority, the adjustment unit 32 determines that output of the new mode is suspended if a level of the new mode is greater than a level of a current mode by a predetermined value (for example, 2) or greater. Thereby, it is possible for the output processing device 1 to prevent, for example, occurrence of an event where a new mode with an output time of 1 minute (or the number of characters being 100) loses against a current mode with an output time of 5 seconds (or the number of characters being 10) due to priorities thereof and is cancelled without being output.

In general, for example, a real-time property is frequently required for a short message, such as, "a mail is received" or "new news is provided". On the other hand, for example, a real-time property is frequently not required for a long message such as reading of text of mail or news.

Hence, in a case where an output request of a long message is provided during output of a short message, such a long message is suspended, and then, output after output of such a short message is finished. On the other hand, in a case where an output request of a short message is provided during output of a long message, there is a high possibility that a real-time property of such a short message is also damaged at a point of time when output of such a long message is finished, and hence, the short message is not suspended but is canceled.

Additionally, a condition for determining suspension is provided in such a manner that a "difference" between a level of a new mode and a level of a current mode is "greater than or equal to a predetermined value", and hence, for example, a long message with a level of 3 or 4 being output continuously after a long message with a level of 3 or 4 is reduced.

Although a real-time property is generally not required for a long message as described above, a user may cause his or her "auditory fatigue" and receive information ineffectively, for example, as new is read continuously after reading of mail. It is possible to provide a user with effective information by preventing long messages from being continued.

Although whether or not suspension of output of a new mode is required is determined based on a level difference between a new mode and a current mode in the above-mentioned example, an embodiment is not limited thereto. For example, in a case where a level of a current mode is less than or equal to 2, output of a new mode is suspended regardless of a level of the new mode. Alternatively, in a case where a level of a new mode is greater than or equal to 3, output of the new mode may be suspended regardless of a level of a current mode.

In the former case, if a current mode is a short message, a real-time property of a message in a new mode is not so damaged even after output of a message in the current mode is finished, so that it is possible to output such a message in a new mode continuously. In the latter case, it is possible to output all information reliably although there is a possibility that long messages are continued.

Furthermore, the adjustment unit 32 may be configured to determine whether or not output of a mode is suspended based on, for example, a remaining period of time or the number of remaining characters until output of a mode during output thereof is completed. In a case where such a configuration is provided, the output processing device 1 further includes a time measurement unit that measures a remaining period of time or a number measurement unit that measures the number of characters until output of a mode during output thereof is completed.

Then, in a case where losing of a new mode is determined as a result of adjustment that is based on a priority, the adjustment unit 32 determines that output of a new mode is suspended if a remaining period of time that is measured by a time measurement unit is less than a predetermined period of time (for example, 5 seconds) or the number of remaining characters that is measured by a number measurement unit is less than or equal to 10. Thereby, it is possible for the output processing device 1 to prevent, for example, occurrence of an event where a new mode loses against a current mode with output that is completed in another 1 second or another 1 character due to priorities thereof and the new mode is not output but is canceled.

As described above, an output processing device according to an embodiment includes an acceptance unit and an adjustment unit. An acceptance unit accepts output requests of information where two or more parameters that include parameters that indicate a priority for outputting information are allocated thereto, respectively.

An adjustment unit executes adjustment between output of first information being continued and second information being output instead of the first information based on parameters in a case where an output request of the second information is accepted by an acceptance unit during output of the first information. Thereby, it is possible for an output processing device to execute adjustment without using an adjustment matrix, and hence, a design change does not have to be executed in a case where information is newly added.

In particular, in a case where output requests of a plurality of on-vehicle instruments that are manufactured by various manufacturers or instruments other than an on-vehicle instrument such as mobile communication terminals or mobile audio players are adjusted and output, a significant effect is provided in such a manner that a freedom of addition or extension of a function is greatly improved so that it is also possible to greatly reduce a development time for dealing with a new function.

Furthermore, two or more parameters include a first parameter that indicates a priority in a case where information is being output and a second parameter that indicates a priority in a case where information is being requested to output. Then, an adjustment unit compares a first parameter of first information and a second parameter of second information to execute adjustment. Thereby, it is possible for an output processing device to derive a result of adjustment in accordance with an adjustment matrix without using the adjustment matrix.

Furthermore, two or more parameters include a third parameter for suspension of output of information. Then, an adjustment unit determines, based on a third parameter, whether or not output is suspended for second information in a case where output of first information is continued and first information in a case where second information is output instead of the first information. Thereby, it is possible for an output processing device to suspend output of information or cancel information, depending on, for example, importance of information that loses in adjustment.

Furthermore, it is possible for a third parameter to be a parameter that indicates whether or not output of information is suspended. Thereby, an output processing device merely determines, after adjustment, a third parameter of the information that loses in the adjustment, so that it is possible to determine, after the adjustment, whether or not output of information that loses in the adjustment is suspended.

Furthermore, it is possible for a third parameter to be a parameter dependent on a length of an output time of information. Thereby, it is possible for an output processing device to execute determination as to whether or not output of information is suspended, more flexibly, depending on a length of an output time of information.

An output processing device according to an embodiment may further include a time measurement unit that measures a remaining period of time until output of information during output thereof is completed. In a case of such a configuration, an adjustment unit determines whether or not output is suspended for second information in a case where output of first information is continued and first information in a case where second information is output instead of the first information, based on a remaining period of time that is measured by a time measurement unit. Thereby, it is possible for an output processing device to execute determination as to whether or not output of information is suspended, more flexibly, depending on a remaining period of time until output thereof is completed.

It is possible for a person skilled in the art to readily derive an additional effect or an illustrative variation. Accordingly, a broader aspect of the present invention is not limited to a specific detail and a representative embodiment as illustrated and described above. Therefore, various modifications are possible without deviating from the spirit or scope of a general inventive concept that is defined by the accompanying claims and equivalents thereof.

### Reference Sign List

- 1: output processing device
- 2: communication unit
- 3: control unit
- 4: storage unit
- 31: acceptance unit
- 32: adjustment unit
- 41: output processing program
- 42: priority in current mode
- 43: suspension mode information
- M1, M2 to Mn: on-vehicle instruments
- N: output device

## Claims

1. An information processing device, comprising
a processor that
sequentially accepts execution requests of a plurality of information processes where two or more pieces of information that indicate a priority are allocated thereto, respectively, and
executes, in a case where an execution request of a second information process is accepted during execution of a first information process among the plurality of information processes, adjustment between execution of the first information process being continued and the second information process being executed instead of the first information process, based on the two or more pieces of information.

2. The information processing device according to claim 1, wherein
the two or more pieces of information include a first piece of information that indicates a priority in a case where the information process is being executed and a second piece of information that indicates a priority in a case where the information process is being requested to be executed, and
the processor compares the first piece of information for the first information process and the second piece of information for the second information process to execute the adjustment.

3. The information processing device according to claim 1 or claim 2, wherein
the two or more pieces of information include a third piece of information for suspension of execution of the information process, and
the processor determines whether or not execution is suspended for the second information process in a case where execution of the first information process is continued and the first information process in a case where the second information process is executed instead of the first information process, based on the third piece of information.

4. The information processing device according to claim 3, wherein the third piece of information is information that indicates whether or not execution of the information process is suspended.

5. The information processing device according to claim 3, wherein the third piece of information is information dependent on a length of execution time of the information process.

6. The information processing device according to claim 1 or claim 2, wherein the processor
measures a remaining period of time until execution of the information process during execution thereof is completed, and
determines whether or not execution is suspended for the second information process in a case where execution of the first information process is continued and the first information process in a case where the second information process is executed instead of the first information process, based on the remaining period of time.

7. The information processing device according to claim 1 or claim 2, wherein the processor
measures, in a case where the first information process and the second information process include a process of outputting a string of characters, a number of remaining characters that are output until the process of outputting a string of characters during execution thereof is completed, and
determines whether or not execution is suspended for the second information process in a case where execution of the first information process is continued and the first information process in a case where the second information process is executed instead of the first information process, based on the number of remaining characters.

8. The information processing device according to claim 1, further comprising
a memory that stores the two or more pieces of information, wherein
the two or more pieces of information include a first parameter that indicates a priority during execution of the information process and a second parameter that indicates a priority during an execution request of the information process, and
the processor
accepts an execution request of a first information process that causes an output device to output an image or sound that is input from a first on-vehicle instrument, among the plurality of information processes, to execute the first information process,
accepts an execution request of a second information process that causes the output device to output another image or sound from a second on-vehicle instrument, among the plurality of information processes, during execution of the first information process, and
compares, in a case where the adjustment is executed, the first parameter that is allocated to the first information process and the second parameter that is allocated to the second information process, to execute the information process with a higher priority.

9. The information processing device according to claim 8, wherein
the two or more pieces of information include a third parameter that indicates whether or not execution of the information process that is not executed as a result of the adjustment is suspended, and
the processor determines whether or not execution of the information process that is not executed as a result of the adjustment is suspended, based on the third parameter that is allocated to the information process.

10. The information processing device according to claim 8, wherein
the two or more pieces of information include a third parameter that corresponds to a processing time of a process of outputting the image or the sound, and
the processor determines whether or not execution of the information process that is not executed as a result of the adjustment is suspended, based on the third parameter that is allocated to the information process.

11. The information processing device according to claim 8, wherein the processor
measures a remaining period of time until the information process during execution thereof is completed, and
determines whether or not execution of the information process that is not executed as a result of the adjustment is suspended, based on the remaining period of time.

12. The information processing device according to claim 8, wherein the processor
measures, in a case where the information process includes a process of outputting a string of characters, a number of remaining characters that are output until the process of outputting a string of characters during execution thereof is completed, and
determines whether or not execution of the information process that is not executed as a result of the adjustment is suspended, based on the number of remaining characters.

13. An information processing method, comprising
sequentially accepting execution requests of a plurality of information processes where two or more pieces of information that indicate a priority are allocated thereto, respectively, and
executing, in a case where an execution request of a second information process is accepted during execution of a first information process among the plurality of information processes, adjustment between execution of the first information process being continued and the second information process being executed instead of the first information process, based on the two or more pieces of information.

14. An image processing method, comprising
storing two or more pieces of information that are allocated to a plurality of information processes, respectively, the two or more pieces of information including a first parameter that indicates a priority during execution of the information process and a second parameter that indicates a priority during an execution request of the information process,
accepting an execution request of a first information process that causes an output device to output an image or sound that is input from a first on-vehicle instrument among the plurality of information processes to execute the first information process,
accepting an execution request of a second information process that causes the output device to output another image or sound from a second on-vehicle instrument, among the plurality of information processes, during execution of the first information process,
executing adjustment between the first information process being continued and the second information process being executed instead of the first information process, based on the two or more pieces of information, and
comparing, in a case where the adjustment is executed, the first parameter that is allocated to the first information process and the second parameter that is allocated to the second information process, to execute the information process with a higher priority.
